# EUROPEAN PATENT APPLICATION

(11) **EP 4 492 534 A1**
(43) Date of publication of application: **15.01.2025**
(21) Application number: 22956775.5
(22) Date of filing: 30.08.2022
(51) Int. Cl.: H01M 10/48, H01M 50/569

(54) **BATTERY CELL, BATTERY AND ELECTRIC APPARATUS**

(71) Applicant: Contemporary Amperex Technology Co., Limited, Ningde, Fujian 352100 (CN)
(72) Inventor: LIN, Denghua, Ningde, Fujian 352100 (CN); CHEN, Long, Ningde, Fujian 352100 (CN); ZHOU, Fangjie, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Herrmann, Uwe
(86) International application number: PCT/CN2022/115741
(87) International publication number: WO 2024/044940

(57) **Abstract**

A battery cell, a battery and an electricity-consuming device are provided by the present application. The battery cell includes a casing and at least one integrated circuit member. The casing includes an accommodating chamber. The integrated circuit member includes a detecting element that is configured to detect a working condition of the battery cell, and the integrated circuit member is arranged inside or outside the accommodating chamber. According to the battery cell provided by the embodiments of the present application, the working condition inside the battery cell can be understood in real time by using the detecting element, thereby facilitating a control element inside or outside the battery cell performing or not performing a corresponding reaction operation, so as to reduce the possibility of further deterioration of the safety hazards of the battery cell, and improve the safety performance of the battery cell.

## Description

### TECHNICAL FIELD

The present application relates to the technical field of batteries, and in particular to a battery cell, a battery and an electricity-consuming device.

### BACKGROUND

A battery is widely used in an electricity device, such as a mobile phone, a laptop, a battery vehicle, an electric car, an electric plane, an electric ship, an electric toy car, an electric toy ship, an electric toy plane and an electric tool. A battery cell may include a cadmium nickel battery cell, a hydrogen nickel battery cell, a lithium-ion battery cell, a secondary alkaline zinc manganese battery cell or the like.

In the development of the battery cell technology, in addition to improving the performance of the battery cell, how to detect the working condition inside the battery cell, make a corresponding reaction in time, and improve the safety performance of the battery cell during the working process of the battery cell become the technical problems that need to be continuously improved in the battery cell technology.

### SUMMARY

The present application provides a battery cell, a battery and an electricity-consuming device, which can improve the safety performance of the battery cell.

In a first aspect, embodiments of the present application provide a battery cell including a casing and at least one integrated circuit member. The casing includes an accommodating chamber. The integrated circuit member includes a detecting element that is configured to detect a working condition of the battery cell, and the integrated circuit member is arranged inside or outside the accommodating chamber.

In the battery cell provided by the embodiments of the present application, by arranging the integrated circuit member which includes the detecting element, the working condition inside the battery cell can be understood in real time through the detecting element, thereby facilitating a control element inside or outside the battery cell performing or not performing a corresponding reaction operation, so as to reduce the possibility of further deterioration of the safety hazards of the battery cell, and improve the safety performance of the battery cell.

In some embodiments, the integrated circuit member is in a shape of plate, sheet or block. It is possible to select the appropriate shape of the integrated circuit member according to the position where the integrated circuit member needs to be located, so as to adapt to the spatial arrangement inside the battery cell and minimize the additional internal space of the battery cell caused by arranging the integrated circuit member. Thus, it is beneficial to ensure the energy density of the battery cell while the working condition of the battery cell can be detected in real time.

In some embodiments, the detecting element includes a temperature sensor, a pressure sensor, a stress sensor, a current sensor, a gas composition detecting sensor, a Bragg grating or a Fabry Perot resonant cavity. Thus, it is beneficial for the integrated circuit member to obtain the working condition of the battery cell more timely and accurately.

In some embodiments, the at least one integrated circuit member further includes a wireless communication unit, that is configured for wireless communication with an exterior of the battery cell. Thus, the circuit connection structure of the battery cell can be simplified and the complexity of the circuit layout at the interior or exterior of the battery can be simplified.

In some embodiments, the battery cell further includes an electrode assembly accommodated in the accommodating chamber. The electrode assembly includes an electrode body and an electrode tab led out from an end of the electrode body. The at least one integrated circuit member is arranged at the electrode tab, and/or the at least one integrated circuit member is arranged at the electrode body. Thus, the detecting element in the integrated circuit member can be used to detect the information such as current or temperature of the electrode tab, so as to determine the overcurrent capacity or the heating situation of the electrode tab; alternatively, the detecting element of the integrated circuit member can be used to detect the stress force at the interior or on a surface of the electrode body, so as to determine the expansion situation of the electrode body; alternatively, the detecting element of the integrated circuit member can be used to detect the information such as the temperature of the electrode body.

In some embodiments, the electrode body includes two first surfaces opposite to each other in a first direction and two second surfaces opposite to each other in a second direction, the two first surfaces are connected to the two second surfaces, each of the first surfaces is set in an arc shape, the electrode tab is led out from the end of the electrode body in a third direction, each two of the first direction, the second direction and the third direction are perpendicular to each other, and the at least one integrated circuit member is arranged on the first surface. Thus, it is beneficial to save the internal space of the battery cell and improve the energy density of the battery cell.

In some embodiments, the battery cell further includes a current collector, which is electrically connected to the electrode tab. A surface of the electrode tab facing the casing includes a first connecting region and a second connecting region, the first connecting region is connected to the current collector, and the at least one integrated circuit member is arranged within the second connecting region and spaced apart from the current collector. Thus, the above arrangement facilitates the connection between the integrated circuit member and the electrode tab. The arrangement of the integrated circuit member spaced apart from the current collector facilitates reducing the risk of the electrical connection between the integrated circuit member and the current collector, thereby reducing the possibility of affecting the normal operation of the integrated circuit member or the current collector.

In some embodiments, the battery cell further includes an electrode assembly and an insulating member. The insulating member and the electrode assembly are located in the accommodating chamber, the insulating member is arranged between the casing and a peripheral surface of the electrode assembly, and the at least one integrated circuit member is arranged on the insulating member. The detecting element in the integrated circuit member includes such as the stress sensor, which is used to detect the stress of the insulating member, so as to understand the damage situation of the insulating member in real time.

In some embodiments, the casing includes a first wall, and the at least one integrated circuit member is arranged on the first wall. According to the arrangement, the temperature information or the like of the first wall of the battery cell can be understood in real time, and the working condition of the battery cell can be determined based on the temperature information of the first wall.

In some embodiments, the integrated circuit member is bonded, snap-fitted or hot-melt connected to the first wall. Thus, the connection between the integrated circuit member and the first wall is simple and reliable.

In some embodiments, the first wall is provided with a groove, and the at least one integrated circuit member is arranged in the groove. Thus, it is beneficial to reduce the internal or external space of the battery cell occupied by the integrated circuit member, improve the energy density of the battery cell, or facilitate assembling the battery cell.

In some embodiments, a depth of the groove is h1, a thickness of the integrated circuit member is h2, and h1 ≥ h2. Thus, the whole integrated circuit member is located in the groove, so as to reduce the additional space occupied by the integrated circuit member, improve the energy density of the battery cell, and reduce the risk of the integrated circuit member falling off the first wall due to impact or scratching.

In some embodiments, the first wall includes a protruding platform, and the at least one integrated circuit member is arranged on the protruding platform. Thus, it is beneficial to improve the connection strength and the stability between the integrated circuit member and the first wall.

In some embodiments, the casing includes a first wall, the battery cell further includes a support member, the at least one integrated circuit member is connected to the support member, and the support member is connected to the first wall. Thus, the assembly process of the battery cell can be simplified, the production efficiency of the battery cell can be improved, and the connection stability of the integrated circuit member can be improved.

In some embodiments, the support member is hot-melt connected, bonded or snap-fitted to the first wall. Thus, the connection method is simple and the connection reliability is high.

In some embodiments, the at least one integrated circuit member is bonded, snap-fitted or hot-melt connected to the support member. Thus, the connection method facilitates the connection between the integrated circuit member and the support member.

In some embodiments, the first wall includes a body part and an insulating part, the insulating part is arranged on a side of the body part close to the accommodating chamber, the insulating part includes a protrusion protruding towards the accommodating chamber, the at least one integrated circuit member is arranged on the insulating part, and the integrated circuit member and the protrusion are arranged side by side in a direction perpendicular to a thickness direction of the first wall. Thus, it is beneficial to save the internal space of the battery cell, reduce the squeezing force between the integrated circuit member and the electrode assembly, and reduce the risk of damage to the surface of electrode assembly by the integrated circuit member.

In some embodiments, a maximum size of the integrated circuit member is smaller than a size of the protrusion in the thickness direction. Thus, when the protrusion is pressed against the electrode assembly, there is still a certain gap between the integrated circuit member and the electrode assembly, so as to reduce the additional space inside the battery cell occupied by the integrated circuit member, and reduce the risk of the interference between the integrated circuit member and the electrode assembly.

In some embodiments, the battery cell further includes an electrode terminal, the electrode terminal penetrates through the body part and the insulating part, and the integrated circuit member is spaced apart from the electrode terminal in the direction perpendicular to the thickness direction of the first wall. Thus, the risk of the interference between the integrated circuit member and the electrode terminal can be reduced, and the risk of affecting the normal operation of the battery cell due to the electrical connection between the integrated circuit member and the electrode terminal can be reduced.

In some embodiments, the at least one integrated circuit member is arranged on a side of the first wall facing the accommodating chamber. The battery cell includes a plurality of electrode assemblies, each of the electrode assemblies includes two first surfaces opposite to each other in a first direction and two second surfaces opposite to each other in a second direction, the two first surfaces are connected to the two second surfaces, each of the first surfaces is in an arc shape, the first direction is perpendicular to the second direction, and the first direction is parallel to a thickness direction of the first wall. The at least one integrated circuit member is located between two adjacent first surfaces in the second direction. Thus, the space formed and enclosed by the arc-shaped surfaces of two adjacent electrode assemblies in the battery cell and the first wall can be used to accommodate the integrated circuit member, which is conducive to the reasonable utilization of the internal space of the battery cell, reducing the internal space of the battery cell which may increase due to arranging the integrated circuit member, and improving the energy density of the battery cell.

In some embodiments, the battery cell further includes a first wall and an electrode terminal, the electrode terminal is arranged on the first wall and configured to transmit electrical energy, and the at least one integrated circuit member is connected to a portion of an end face of the electrode terminal located outside the accommodating chamber. Thus, the integrated circuit member can be used to detect the information such as the temperature of the electrode terminal or the current flowing through the electrode terminal, so as to understand the working condition of the electrode terminal in real time.

In some embodiments, the integrated circuit member is bonded or welded to the electrode terminal. Thus, the connection between the integrated circuit and the electrode terminal can be simple and the good connection stability can be achieved.

In some embodiments, the casing includes a first wall, the battery cell further includes a holding member, an insulating component and an electrode terminal, the electrode terminal is configured to transmit electrical energy, and the insulating component is configured to insulate the electrode terminal from the first wall. The holding member is connected to the insulating component, and the at least one integrated circuit member is arranged on the holding member. Thus, the assembly process of the battery cell can be simplified; moreover, due to the better connection stability between the integrated circuit member and the holding member, and between the holding member and insulating component, the connection stability of the integrated circuit member can be improved, and the risk of the detachment of the integrated circuit member can be reduced.

In a second aspect, embodiments of the present application provide a battery including the battery cell according to any one of the embodiments in the first aspect.

According to the embodiments of the present application, the battery has the same technical effect as described above due to including the battery cell according to any one of the above embodiments, which will not be repeated here.

In some embodiments, the battery further includes a busbar and a wiring harness separator. The busbar is configured to electrically connect two adjacent battery cells. The busbar is connected to the wiring harness separator, and the at least one integrated circuit member is arranged on a side of the wiring harness separator facing the battery cells. The integrated circuit member is arranged in the space between the wiring harness separator and the battery cells, so as to reduce the additional space occupied by the integrated circuit member. Moreover, the integrated circuit members can be used to detect the changes in pressure, temperature or the like, so as to understand the working condition of the corresponding battery cells in real time.

In a third aspect, embodiments of the present application provide an electricity-consuming device including the battery according to any one of the embodiments in the second aspect, which is configured to provide electrical energy.

According to the embodiments of the present application, the electricity-consuming device has the same technical effect as described above due to including the battery according to the embodiments of the present application, which will not be repeated here.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a structural schematic view of a vehicle according to an embodiment of the present application;
Fig. 2 shows an exploded structural schematic view of a battery according to an embodiment of the present application;
Fig. 3 shows a structural schematic view of a battery module in a battery according to an embodiment of the present application;
Fig. 4 shows an exploded schematic view of a battery cell according to some embodiments of the present application;
Fig. 5 shows a structural schematic view of a battery cell which omits a portion of structure according to an embodiment of present application;
Fig. 6 shows a structural schematic view of another battery cell which omits a portion of structure according to an embodiment of present application;
Fig. 7 shows a structural schematic view of another battery cell which omits a portion of structure according to an embodiment of present application;
Fig. 8 shows a structural schematic view of another battery cell which omits a portion of structure according to an embodiment of present application;
Fig. 9 shows a schematic view of a connection structure between a casing of a battery cell and an integrated circuit member according to an embodiment of present application;
Fig. 10 shows a structural schematic view of a battery cell according to an embodiment of the present application;
Fig. 11 shows a structural schematic view of another battery cell which omits a portion of structure according to an embodiment of present application;
Fig. 12 shows a front view of a battery cell according to an embodiment of the present application;
Fig. 13 shows a cross-sectional structural view along line A-A in Fig. 12;
Fig. 14 shows a structural schematic view of another battery cell according to an embodiment of the present application;
Fig. 15 shows a structural schematic view of a first wall, a support member and an integrated circuit member in a battery cell according to an embodiment of the present application;
Fig. 16 shows a schematic view of a connection structure between a first wall and an integrated circuit member in a battery cell according to an embodiment of the present application;
Fig. 17 shows a schematic view of a connection structure between an integrated circuit member and an electrode terminal in a battery cell according to an embodiment of the present application;
Fig. 18 shows a structural schematic view of an integrated circuit member which is connected to an insulating component through a holding member in the battery cell according to an embodiment of the present application;
Fig. 19 shows an exploded structural schematic view of Fig. 18;
Fig. 20 shows a structural schematic view of a battery which omits a portion of structure according to an embodiment of present application; and
Fig. 21 shows a cross-sectional structural view along line B-B in Fig. 20.

In the drawings, the drawings are not drawn to actual scale.

The reference numerals are as follows:
1. vehicle; 1a. motor; 1b. controller;
10. battery; 11. first housing portion; 12. second housing portion;
20. battery module;
30. battery cell; 31. casing; 31a. accommodating chamber; 311. casing body; 311a, opening; 312. end cover; 313. first wall; 313a. groove; 313b. protruding platform; 3131. body part; 3132. insulating part; 3132a. protrusion; 32. electrode assembly; 321. electrode body; 321a. first surface; 321b. second surface; 322.electrode tab; 33. electrode terminal; 34. integrated circuit member; 35. current collector; 36. insulating member; 37. support member; 38. holding member; 39. insulating component;
40. busbar;
50. wiring harness separator;
X. first direction; Y. second direction; Z. third direction; O. thickness direction.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a portion of the embodiments of the present application, and not all of them. Based on the embodiments of the present application, all other embodiments obtained by those skilled in the art without the creative labor fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, length, width and other sizes of the various components in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In embodiments of the present application, a battery cell may include, but not limited to, a lithium-ion secondary battery cell, a lithium-ion primary battery cell, a lithium-sulfur battery cell, a sodium lithium ion battery cell, a sodium ion battery cell, a magnesium ion battery cell and the like. In embodiments of the present application, the battery cell can be in a shape of, but not limited to, a cylinder, a flatten body, a cuboid or other shapes. In embodiments of the present application, the battery cell can include, but not limited to, three types according to the packaging method such as a cylindrical battery cell, a square battery cell and a soft packaging battery cell.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer applied on the surface of the positive electrode current collector. The positive electrode current collector includes a positive electrode current collecting portion and a positive electrode protrusion protruding from the positive electrode current collecting portion. The positive electrode current collecting portion is coated with the positive electrode active material layer, and at least a portion of the positive electrode tab is not coated with the positive electrode active material layer. The positive electrode protrusion can be serve as a positive electrode tab. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer applied on the surface of the negative electrode current collector. The negative electrode current collector includes a negative electrode current collecting portion and a negative electrode protrusion protruding from the negative electrode current collecting portion. The negative electrode current collecting portion is coated with the negative electrode active material layer, and at least a portion of the negative electrode tab is not coated with the negative electrode active material layer. The negative electrode protrusion can be serve as a negative electrode tab. The material of the negative electrode current collector may be copper, and the negative electrode active material layer includes a negative electrode active material, which may be carbon, silicon or the like. In order to ensure the high current passing through without fusing, a plurality of positive electrode tabs are stacked together, and a plurality of negative electrode tabs are stacked together. The material of the separator may be PP (polypropylene), PE (polyethylene) or the like. In addition, the electrode assembly may be a winding-type structure or a stack-type structure, which is not limited in the embodiments of the present application.

After finding the problem of low safety performance of the battery cell, the inventors systematically analyzed and studied the structure and the operation process of battery cell. The results show the problem of low service life of the battery cell during its operation, so that the inventors systematically analyzed and studied the structure and the operation process of battery cell. The results show the working condition inside the battery cell is hard to be known during its operation. Therefore, when the battery cell is in a harsh working condition, such as high temperature or high pressure, the operator or a control member of the battery cell cannot perform the corresponding reaction based on the specific working condition of the battery cell. As the working time of the battery cell increases under the harsh condition, it can lead to the adverse consequence such as explosion, which may seriously affect the safety performance of the battery cell.

Based on the above-mentioned problems found by the inventors, the inventors have improved the structure of the battery cell. The technical solution described in the embodiments of present application is applicable to a battery cell, a battery including the battery cell and an electricity-consuming device using the battery.

The battery cell provided by the embodiments of the present application includes a casing and at least one integrated circuit member. The casing is provided with an accommodating chamber, and the integrated circuit member includes a detecting element, that is used to detect the working condition of the battery cell. The integrated circuit member is arranged inside or outside the accommodating chamber.

The battery cell provided by the embodiments of present application includes the integrated circuit member including the detecting element, and the integrated circuit member is arranged inside or outside the battery cell, so as to obtain the working condition of the battery cell through the detecting element in real time. When the detecting element detects a certain safety hazard in the battery cell, it can transmit the information to a control element outside the battery cell, so as to enable the control element to control the battery cell to perform or not perform a corresponding reaction, or the control element issues an alarm, so that the operator can perform the corresponding reaction, so as to reduce the risk of further deterioration of the safety hazard in the battery cell, and improve the safety performance of the battery cell.

The electricity-consuming device may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming device.

For the convenience of explanation, the following embodiments take a vehicle being as the electricity-consuming device as an example to illustrate.

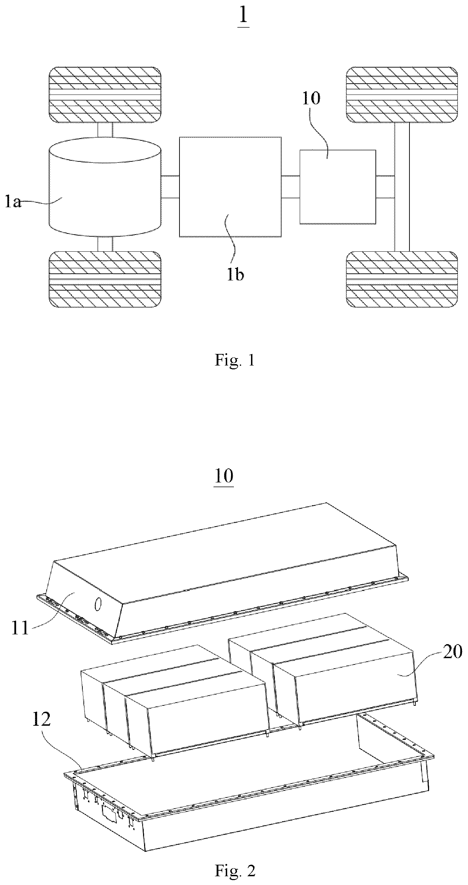

As shown in Fig. 1, a battery 10 may be arranged at the inside of the vehicle 1, and the battery 10 may be arranged in the bottom, the front or the back of the vehicle 1. The battery 10 can be used to supply power to the vehicle 1, for example, the battery 10 can be used as an operating power source of the vehicle 1.

The vehicle 1 may further include a controller 1b and a motor 1a. The controller 1b can be used to control the battery 10 to supply power to the motor 1a, for example, for satisfying the work electricity needs of the vehicle 1 during starting, navigating and driving.

In some embodiments of the present application, the battery 10 can not only serve as an operating power source for the vehicle 1, but also as a driving power source for the vehicle 1, so as to replace or partially replace the fuel or the natural gas and provide the driving power for the vehicle 1.

As shown in Fig. 2, the battery 10 includes a battery cell (not shown in Fig. 2) and a housing which is used to accommodate the battery cell.

The housing is used to accommodate the battery cell, and the housing can be of various structures. In some embodiments, the housing may include a first housing portion 11 and a second housing portion 12. The first housing portion 11 and the second housing portion 12 cover each other. The first housing portion 11 and the second housing portion 12 jointly define an accommodating space for accommodating the battery cell. The second housing portion 12 may be a hollow structure having an opening at an end, and the first housing portion 11 may be a plate-like structure. The first housing portion 11 is covered with the side of the second housing portion 12 with the opening to form the housing having the accommodating space. Or each of the first housing portion 11 and the second housing portion 12 may be a hollow structure having an opening on a side. The side of the first housing portion 11 with the opening is covered with the side of the second housing portion 12 with the opening to form the housing having the accommodation space. Of course, the first housing portion 11 and the second housing portion 12 may be in various shapes, such as a cylinder and a rectangular parallelepiped.

In order to improve the sealing performance after the first housing portion 11 is connected with the second housing portion 12, a sealing member, such as a sealant and a sealing ring, may be arranged between the first housing portion 11 and the second housing portion 12.

It can be assumed that the first housing portion 11 is covered with the second housing portion 12, the first housing portion 11 can be called an upper housing cover, and the second housing portion 12 can be called a lower housing portion.

In the battery 10, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, parallel or hybrid together, and then a whole composed of the plurality of battery cells can be accommodated in the housing. Or the plurality of battery cells can be connected in series, in parallel or hybrid to form the battery module 20. A plurality of battery modules 20 are connected in series, in parallel or in hybrid to form a whole and are accommodated in the housing.

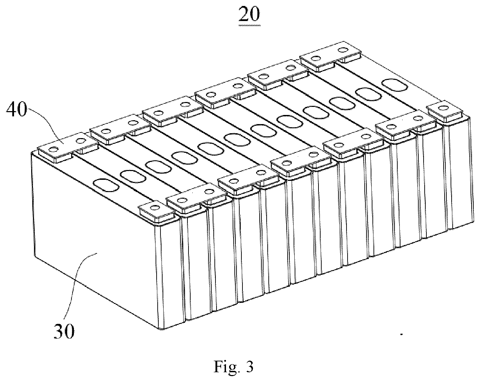

In some embodiments, as shown in Fig. 3, Fig. 3 is a structural schematic view of the battery module 20 shown in Fig. 2. The battery module 20 includes a plurality of battery cells 30. The plurality of battery cells 30 are connected in series, in parallel or in hybrid to form the battery module 20. The plurality of battery cells battery modules 20 are connected in series, in parallel or in hybrid to form a whole and are accommodated in the housing.

In some embodiments, the plurality of battery cells 30 in battery module 20 may be electrically connected with one another through a busbar, so as to achieve the parallel connection, the series connection or the hybrid connection among the plurality of battery cells 30 in the battery module 20.

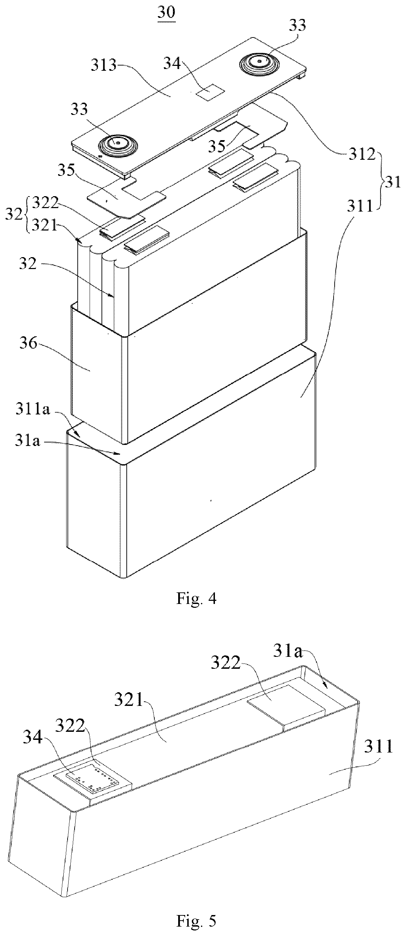

Referring to Fig. 4, Fig. 4 shows an exploded schematic view of the battery cell 30 shown in Fig. 3.

Embodiments of the present application provide a battery cell 30 including a casing 31 and at least one integrated circuit member 34. The casing 31 includes an accommodating chamber 31a. The integrated circuit member 34 includes a detecting element that is configured to detect a working condition of the battery cell 30, and the integrated circuit member is arranged inside or outside the accommodating chamber 31a.

In some embodiments, the battery cell 30 further includes an electrode assembly 32, which is accommodated in the accommodating chamber 31a.

In some embodiments, the casing 31 may include a casing body 311 and an end cover 312. The casing body 311 is a hollow structure with an opening 311a on a side, and the end cover 312 covers and sealingly connects with the opening 311a of the casing body 311, so as to form a sealing space for accommodating the electrode assembly 32 and the electrolyte.

When the battery cell 30 is assembled, the electrode assembly 32 can be placed into the casing body 311, then the end cover 312 covers the opening 311a of the casing body 311, and finally the electrolyte is injected into the casing body 311 through an electrolyte-injecting port on the end cover 312.

In some embodiments, the casing 31 may also be used to accommodate the electrolyte, such as electrolyte liquid. The casing 31 can be in form of various structures.

The casing body 311 can be of various shapes, such as cylinder or cuboid. The shape of the casing body 311 can be determined based on the specific shape of the electrode assembly 32. For example, if the electrode assembly 32 is in a cylindrical structure, the casing body 311 can be in the cylindrical structure; if the electrode assembly 32 is in a rectangular structure, the casing body 311 can in the rectangular structure. In Fig. 4, exemplarily, each of the casing body 311 and the electrode assembly 32 is in the rectangular structure.

The material of the casing body 311 can be various, such as copper, iron, aluminum, stainless steel or aluminum alloy, which is not specially restricted in the embodiments of the present application.

There may be one or more electrode assemblies 32 accommodated in the casing body 311. In Fig. 4, there are two electrode assemblies 32 accommodated in the casing body 311.

Various detecting units, circuits or related control members can be integrated on the integrated circuit member 34. The shape of the integrated circuit member 34 can be in a plate, a block, a sheet, a sphere, a cone or other irregular shapes, and can be determined according to the actual needs.

Optionally, the integrated circuit member 34 can be arranged on the casing 31, or on the electrode assembly 32, or on other structures of the battery cell 30, and can be arranged on a position according to the specific parameters inside the battery cell 30 that need to be detected.

In the embodiment where the integrated circuit member 34 is arranged on the casing 31, the integrated circuit member 34 can be arranged on the casing body 311 or on the end cover 312. Moreover, the integrated circuit member 34 can be arranged inside or outside the casing 31, or arranged both inside and outside the casing 31.

Optionally, the detecting element can be a sensor, such as a temperature sensor, a pressure sensor or a stress sensor, used to detect the parameters such as temperature, pressure or stress at the corresponding position. Of course, the detecting element can also be other related component used to detect the composition and the content of the gas inside the battery cell 30.

Exemplarily, the detecting element can be used to detect the air pressure inside the battery cell 30 and transmit the detecting results to the related control element, so that the control element can perform the corresponding adjustment, reduce the risk of further increase in the air pressure inside the battery cell 30, which may affect the safety performance of the battery cell 30. Alternatively, the detecting element can be used to detect any temperature of the battery cell 30 that needs to be understood, which can facilitate the control element inside or outside the battery cell 30 performing the corresponding reaction and reducing the risk of further increase in the temperature. Alternatively, the detecting element can be used to detect the content of the specific gas inside the battery cell 30, so that the related control element can determine whether the battery cell 30 is in a normal cyclic operation state or not. When the content of the specific gas is not within a predetermined range, it is convenient for the control element to control the battery cell 30 to take a corresponding remedial measure. Alternatively, the control element can issue an alarm, so that the operator can perform the corresponding remedial measure to ensure the normal operation of the battery cell 30.

Optionally, one battery cell 30 may be provided with one integrated circuit member 34 or a plurality of integrated circuit members 34. One integrated circuit member 34 can integrate one type of detecting element or a plurality of detecting elements at the same time.

In an embodiment where the battery cell 30 is provided with the plurality of integrated circuit members 34, the structures of the plurality of integrated circuit members 34 may be the same, and the structures of the plurality of integrated circuit members 34 may be different or the functions of the detecting elements in the plurality of integrated circuit members may be different. Different integrated circuit members 34 can be correspondingly located at different positions, so as to achieve detecting different operating parameters of the battery cell 30 through different integrated circuit members 34.

In some embodiments, the integrated circuit member 34 can be electrically connected to the control element inside or outside the battery cell 30 through optical fibers or cables, so as to transmit the detected parameter information of the battery cell 30 to the control element by the integrated circuit member 34, so that the control element can perform or may not perform the corresponding reaction based on the detecting results.

Of course, alternatively, the communication method between the integrated circuit member 34 and the control element inside or outside the battery cell 30 can be the wireless communication. That is, the integrated circuit member 34 is connected to the external control element without a wiring line, but transmits the detected working condition of the battery cell 30 to the control element outside the battery cell 30 by means of wireless transmission.

In the battery cell 30 provided by the embodiments of the present application, by arranging the integrated circuit member 34 which includes the detecting element, the working condition inside the battery cell 30 can be understood in real time through the detecting element, thereby facilitating a control element inside or outside the battery cell 30 performing or not performing a corresponding reaction operation, so as to reduce the possibility of further deterioration of the safety hazards of the battery cell 30, and improve the safety performance of the battery cell 30.

In some embodiments, the integrated circuit member 34 is in a shape of plate, sheet or block.

It is possible to select the appropriate shape of the integrated circuit member 34 according to the position where the integrated circuit member needs to be located, so as to adapt to the spatial arrangement inside the battery cell 30 and minimize the additional internal space of the battery cell 30 caused by arranging the integrated circuit member 34. Thus, it is beneficial to ensure the energy density of the battery cell 30 while the working condition of the battery cell 30 can be detected in real time.

Exemplarily, when the electrode assembly 32 is in a shape of cylinder, the integrated circuit member 34 can be set in an arc shape that matches with a surface of the cylindrical electrode assembly 32. In the case that a surface of a portion of the electrode assembly 32 is in a planar shape and a surface of the other portion is in an arc shape, according to the position of the integrated circuit member 34 relative to the electrode assembly 32, the integrated circuit member can be set in a planar shape or an arc shape matching with the arc-shaped surface of the electrode assembly 32.

In some embodiments, the detecting element includes a temperature sensor, a pressure sensor, a stress sensor, a current sensor, a gas composition detecting sensor, a Bragg grating or a Fabry Perot resonant cavity.

Specifically, the temperature sensor can be used to measure the temperature at a specific position of battery cell 30. The pressure sensor can be used to measure the gas pressure at a specific position of battery cell 30. The current sensor can be used to measure the current flowing through the related structure of battery cell 30, such as electrode terminals 33. The gas composition detecting sensor can be used to detect the composition and content of the gas within the battery cell 30, such as the content of the gas component produced and decomposed by the electrolyte liquid, so as to determine the content of the electrolyte within battery cell 30. The Bragg gratings can be used to detect the condition such as the hydrogen gas inside the battery 10 or the dendrite growth inside battery cell 30. The Briberyl Perot resonant cavity can be used to more sensitively detect the pressure inside the battery cell 30.

Optionally, one integrated circuit member 34 can be integrated with one of the temperature sensor, the pressure sensor, the current sensors, the gas composition detecting sensor, the Bragg grating or the Fabry Perot resonant cavity, or the same integrated circuit member 34 can be integrated with a plurality of detecting elements, which can have a plurality of detecting functions. Thus, the integrated circuit member can be set according to the specific situation.

Therefore, the detecting element includes the temperature sensor, the pressure sensor, the stress sensor, the current sensor, the gas composition detecting sensor, the Bragg grating or the Fabry Perot resonant cavity, so that it is beneficial for the integrated circuit member 34 to obtain the working condition of the battery cell 30 more timely and accurately.

In some embodiments, the at least one integrated circuit member 34 includes a wireless communication unit, that is configured for wireless communication with an exterior of the battery cell 30.

Specifically, the working condition of the battery cell 30 detected by the detecting unit can be transmitted to the control element outside the battery cell 30 through the wireless communication unit, so as to determine whether a corresponding reaction is performed or not performed to the battery cell 30. Thus, the circuit connection structure of the battery cell 30 can be simplified and the complexity of the circuit layout at the interior or exterior of the battery 10 can be simplified.

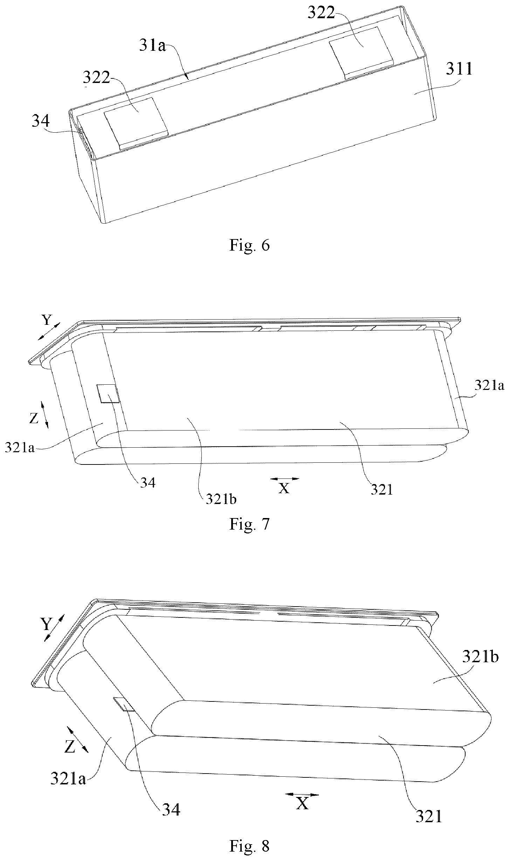

Fig. 5 shows a structural schematic view of the integrated circuit member 34 arranged at an electrode tab 322 in the battery cell according to the embodiments of the present application, and Fig. 6 shows a structural schematic view of the integrated circuit member 34 arranged at an electrode body 321 in the battery cell according to the embodiments of the present application.

As shown in Fig. 5 and Fig. 6, in some embodiments, the battery cell 30 further includes an electrode assembly 32 accommodated in the accommodating chamber 31a. The electrode assembly 32 includes an electrode body 321 and an electrode tab 322 led out from an end of the electrode body 321. The at least one integrated circuit member 34 is arranged at the electrode tab 322, and/or the at least one integrated circuit member 34 is arranged at the electrode body 321.

Optionally, the integrated circuit member 34 may be arranged only on the electrode tab 322, or only on the electrode body 321, or both on the electrode tab 322 and the electrode body 321.

Optionally, the integrated circuit member 34 can be arranged on a surface of the electrode tab 322 or inside the electrode tab 322. Similarly, the integrated circuit member 34 can be electrode tab on a surface of the electrode body 321 or inside the electrode body 321.

In the embodiment that the integrated circuit member 34 is arranged at the electrode tab 322, the detecting element in the integrated circuit member 34 can be used to detect the information such as current or temperature of the electrode tab 322, so as to determine the overcurrent capacity or the heating situation of the electrode tab 322.

In the embodiment that the integrated circuit member 34 is arranged at the electrode body 321, the detecting element of the integrated circuit member 34 can be used to detect the stress force at the interior or on a surface of the electrode body 321, so as to determine the expansion situation of the electrode body 321; alternatively, the detecting element of the integrated circuit member 34 can be used to detect the information such as the temperature of the electrode body 321.

As shown in Fig. 7 and Fig. 8, in some embodiments, the electrode body 321 includes two first surfaces 321a opposite to each other in a first direction X and two second surfaces 321b opposite to each other in a second direction Y, the two first surfaces 321a are connected to the two second surfaces 321b, the electrode tab 322 is led out from the end of the electrode body 321 in a third direction Z, each two of the first direction X, the second direction Y and the third direction Z are perpendicular to each other, each of the first surfaces 321a is set in an arc shape, and the at least one integrated circuit member 34 is arranged on the first surface 321a.

Thus, the electrode assembly 32 can be a square wound electrode assembly. Due to the relative large space between the arc-shaped first surface 321a and the casing 31, the integrated circuit member 34 can be arranged in the space. Therefore, the at least one integrated circuit member 34 can be arranged on the first surface 321a.

As shown in Fig. 4 and Fig. 7, in some embodiments, the battery cell 30 further includes a current collector 35, which is electrically connected to the electrode tab 322. A surface of the electrode tab 322 facing the casing 31 includes a first connecting region and a second connecting region, the first connecting region is connected to the current collector 35, and the at least one integrated circuit member 34 is arranged within the second connecting region and spaced apart from the current collector 35.

Optionally, the integrated circuit member 34 can be snap-fitted, bonded or hot-melt connected to a surface of the second connecting region, or embedded into the second connecting region.

Thus, the above arrangement facilitates the connection between the integrated circuit member 34 and the electrode tab 322. The arrangement of the integrated circuit member 34 spaced apart from the current collector 35 facilitates reducing the risk of the electrical connection between the integrated circuit member 34 and the current collector 35, thereby reducing the possibility of affecting the normal operation of the integrated circuit member 34 or the current collector 35.

In some embodiments, the battery cell 30 further includes an electrode assembly 32 and an insulating member 36. The insulating member 36 and the electrode assembly 32 are located in the accommodating chamber 31a, the insulating member 36 is arranged between the casing 31 and a peripheral surface of the electrode assembly 32, and the at least one integrated circuit member 34 is arranged on the insulating member 36.

Specifically, the insulating member 36 may cover on the peripheral surface of the electrode assembly 32 to achieve the insulation between the electrode assembly 32 and the casing 31.

Optionally, the at least one integrated circuit member 34 may be arranged on a surface of the insulating member 36 on a side close to the electrode assembly 32, or on a surface of the insulating member 36 on a side close to the casing 31, or the integrated circuit member 34 may be embedded into an interior of the insulating member 36.

In this embodiment, the detecting element in the integrated circuit member 34 includes such as the stress sensor, which is used to detect the stress of the insulating member 36, so as to understand the damage situation of the insulating member 36 in real time.

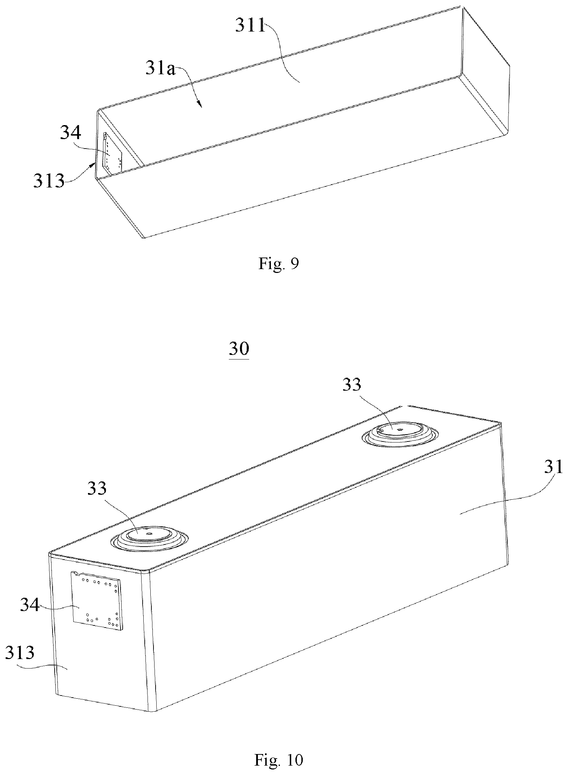

Fig. 9 and Fig. 10 show a structural schematic view of the integrated circuit member 34 arranged on a first wall 313 in the battery cell according to an embodiment of the present application.

As shown in Fig. 9 and Fig. 10, in some embodiments, the casing 31 includes a first wall 313, and the at least one integrated circuit member 34 is arranged on the first wall 313.

Optionally, the first wall 313 may be a portion of the end cover 312, or the first wall 313 may be a portion of the casing body 311.

Optionally, the integrated circuit member 34 may be arranged on a side of the first wall 313 close to the accommodating chamber 31a, or on a side of the first wall 313 away from the accommodating chamber 31a, that is on the exterior of the first wall 313, or at least a portion of the integrated circuit member 34 may be embedded into the interior of the first wall 313. The integrated circuit member can be arranged according to the specific needs.

According to the arrangement, the temperature information or the like of the first wall 313 of the battery cell 30 can be understood in real time, and the working condition of the battery cell 30 can be determined based on the temperature information of the first wall 313.

In some embodiments, the integrated circuit member 34 is bonded, snap-fitted or hot-melt connected to the first wall 313.

Specifically, the integrated circuit member 34 can be bondedly connected to the first wall 313 through an adhesive, or the integrated circuit member 34 and the first wall 313 may respectively include a pair of concave and convex structures which can match with each other, and can be snap-fitted with each other through the pair of concave and convex structures. Alternatively, a hot-melt member in a molten state can be arranged between the first wall 313 and the integrated circuit member 34, and the connection between the first wall 313 and the integrated circuit member 34 can be achieved after the hot-melt member cools and solidifies.

According to the arrangement, the connection between the integrated circuit member 34 and the first wall 313 is simple and reliable.

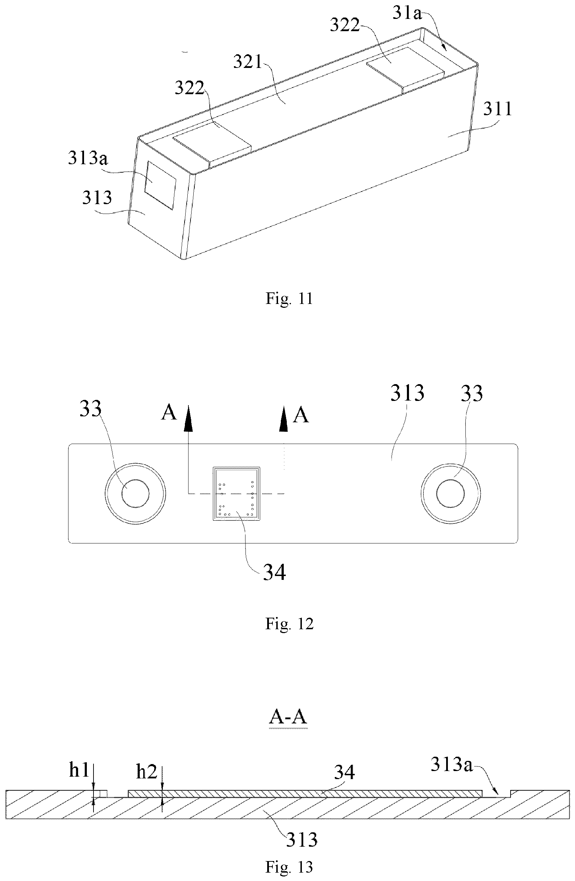

As shown in Fig. 11 to Fig. 13, in some embodiments, the first wall 313 is provided with a groove 313a, and the at least one integrated circuit member 34 is arranged in the groove 313a.

Optionally, according to the requirement of the position where the integrated circuit member 34 is arranged, the groove 313a can be arranged to face the accommodating chamber 31a, or the groove 313a can be arranged to face the exterior of the battery cell 30.

It should be understood that the first wall 313 is provided with the groove 313a, and the integrated circuit member 34 is arranged in the groove 313a, thus, it is beneficial to reduce the internal or external space of the battery cell 30 occupied by the integrated circuit member 34, improve the energy density of the battery cell 30, or facilitate assembling the battery cell 30.

Optionally, the integrated circuit member 34 can protrude from the groove 313a or be fully accommodated inside the groove 313a after placed in the groove 313a. The integrated circuit member can be arranged according to the specific needs, which is not restricted here.

In some embodiments, a depth of the groove 313a is h1, a thickness of the integrated circuit member 34 is h2, and h1 ≥h2.

That is, the depth of the groove 313a is larger than or equal to the thickness of the integrated circuit member 34, or the depth of the groove 313a is equal to the thickness of the integrated circuit member 34.

Thus, the whole integrated circuit member 34 is located in the groove 313a, so as to reduce the additional space occupied by the integrated circuit member 34, improve the energy density of the battery cell 30, and reduce the risk of the integrated circuit member 34 falling off the first wall 313 due to impact or scratching.

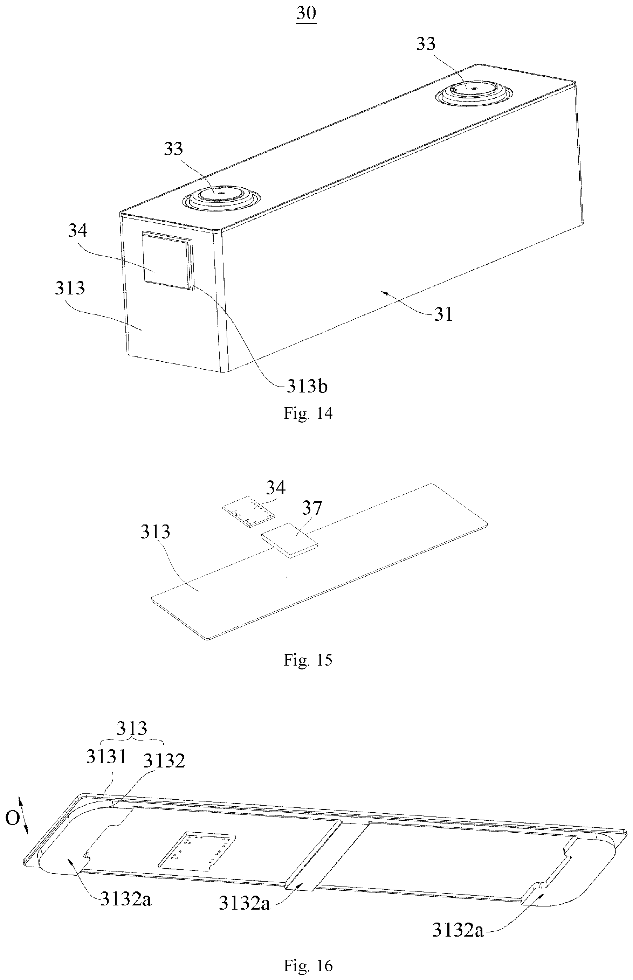

As shown in Fig. 14, in some embodiments, the first wall 313 includes a protruding platform 313b, and the at least one integrated circuit member 34 is arranged on the protruding platform 313b.

Optionally, the protruding platform 313b can protrude towards a side of the accommodating chamber 31a, and in this case, the integrated circuit member 34 can be arranged on a side of the protruding platform 313b facing the accommodating chamber 31a; alternatively, the protruding platform 313b can be arranged to face the exterior of the battery cell 30, and in this case, the integrated circuit member 34 can be arranged at the exterior of the battery cell 30.

The first wall 313 includes the protruding platform 313b, and the integrated circuit member 34 is arranged on the protruding platform 313b, so that it is beneficial to improve the connection strength and the stability between the integrated circuit member 34 and the first wall 313.

As shown in Fig. 15, in some embodiments, the casing 31 includes a first wall 313, the battery cell 30 further includes a support member 37, the at least one integrated circuit member 34 is connected to the support member 37, and the support member 37 is connected to the first wall 313.

Optionally, the first wall 313 can be a portion of the casing body 311 or a portion of the end cover 312, or the first wall 313 can be both a portion of the casing body 311 and a portion of the end cover 312.

Thus, the integrated circuit member is connected to the support member 37, and then the support member 37 is connected to the first wall 313, so as to achieve the connection between the integrated circuit member 34 and the first wall 313 through the support member 37, so that the assembly process of the battery cell 30 can be simplified, the production efficiency of the battery cell 30 can be improved, and the connection stability of the integrated circuit member 34 can be improved.

Optionally, the support member 37 can be connected to the first wall 313 through snap-fitting, bonding, threaded connection, riveting, pin connection or the like. The connection method can be chosen according to the actual needs, which is not restricted here.

In some embodiments, the support member 37 is hot-melt connected, bonded or snap-fitted to the first wall 313.

The support member 37 is connected to the first wall 313 through the above connection method, and the connection method is simple and the connection reliability is high.

In some embodiments, the at least one integrated circuit member 34 is bonded, snap-fitted or hot-melt connected to the support member 37.

Exemplarily, a snap-fitting slot which has a shape matching with a shape of the integrated circuit member 34 can be provided on the support member 37, and the integrated circuit member 34 can be snap-fitted into the snap-fitting slot, or the integrated circuit member 34 can be bonded or hot-melt connected into the snap-fitting slot.

Thus, the connection method facilitates the connection between the integrated circuit member 34 and the support member 37.

As show in Fig. 16, in some embodiments, the first wall 313 includes a body part 3131 and an insulating part 3132, the insulating part 3132 is arranged on a side of the body part 3131 close to the accommodating chamber 31a. The insulating part 3132 includes a protrusion 3132a protruding towards the accommodating chamber 31a. The at least one integrated circuit member 34 is arranged on the insulating part 3132. The integrated circuit member 34 and the protrusion 3132a are arranged side by side in a direction perpendicular to a thickness direction O of the first wall 313.

The insulating part 3132 is arranged on a side of the body part 3131 close to the accommodating chamber 31a, and is located between the body part 3131 and the electrode assembly 32, so as to achieve the insulation between the body part 3131 and the electrode assembly 32.

Optionally, the protrusion 3132a can be abutted against the electrode assembly 32, so as to fix the electrode assembly 32, and reduce the risk of the shaking of the electrode assembly 32 inside the battery cell 30.

In the embodiment where the first wall 313 serves as the end cover 312, an electrode terminal 33 is arranged on the first wall 313. In this case, the integrated circuit member 34 and the electrode terminal 33 can be arranged side by side at the same time.

It should be understood that the integrated circuit member 34 and the protrusion 3132a are arranged side by side in the direction perpendicular to the thickness direction O of the first wall 313, so that it is beneficial to save the internal space of the battery cell 30, reduce the squeezing force between the integrated circuit member 34 and the electrode assembly 32, and reduce the risk of damage to the surface of electrode assembly 32 by the integrated circuit member 34.

In some embodiments, a maximum size of the integrated circuit member 34 is smaller than a size of the protrusion 3132a in the thickness direction O.

Thus, when the protrusion 3132a is pressed against the electrode assembly 32, there is still a certain gap between the integrated circuit member 34 and the electrode assembly 32, so as to reduce the additional space inside the battery cell 30 occupied by the integrated circuit member 34, and reduce the risk of the interference between the integrated circuit member 34 and the electrode assembly 32.

As shown in Fig. 4, Fig. 16 and Fig. 17, in some embodiments, the battery cell 30 further includes an electrode terminal 33, the electrode terminal 33 penetrates through the body part 3131 and the insulating part 3132, and the integrated circuit member 34 is spaced apart from the electrode terminal 33 in the direction perpendicular to the thickness direction O of the first wall 313.

The electrode terminal 33 penetrates through the body part 3131 and the insulating part 3132, so as to achieve the electrical connection between the current collector 35 and the electrode tab 322. The integrated circuit member 34 is spaced apart from the electrode terminal 33, so that the risk of the interference between the integrated circuit member 34 and the electrode terminal 33 can be reduced, and the risk of affecting the normal operation of the battery cell 30 due to the electrical connection between the integrated circuit member and the electrode terminal can be reduced.

In some embodiments, the at least one integrated circuit member 34 is arranged on a side of the first wall 313 facing the accommodating chamber 31a. The battery cell 30 includes a plurality of electrode assemblies 32, each of the electrode assemblies 32 includes two first surfaces 321a opposite to each other in a first direction X and two second surfaces 321b opposite to each other in a second direction Y, the two first surfaces 321a are connected to the two second surfaces 321b, each of the first surfaces 321a is in an arc shape, the first direction X is perpendicular to the second direction Y, and at least one integrated circuit member 34 is located between two adjacent first surfaces 321a in the second direction Y.

The integrated circuit member 34 is located between two adjacent first surfaces 321a in the second direction Y, so that the space formed and enclosed by the arc-shaped surfaces of two adjacent electrode assemblies 32 in the battery cell 30 and the first wall 313 can be used to accommodate the integrated circuit member 34, which is conducive to the reasonable utilization of the internal space of the battery cell 30, reducing the internal space of the battery cell 30 which may increase due to arranging the integrated circuit member 34, and improving the energy density of the battery cell 30.

In some embodiments, the battery cell 30 further includes a first wall 313 and an electrode terminal 33, the electrode terminal 33 is arranged on the first wall 313 and configured to transmit electrical energy, and the at least one integrated circuit member 34 is arranged at a portion of an end face of the electrode terminal 33 located outside the accommodating chamber 31a.

Thus, the integrated circuit member 34 can be used to detect the information such as the temperature of the electrode terminal 33 or the current flowing through the electrode terminal 33, so as to understand the working condition of the electrode terminal 33 in real time.

The integrated circuit member 34 is connected to a portion of an end face of the electrode terminal 10 located outside the accommodating chamber 31a, the other portion of the end face of the electrode terminal 33 can be used to connect with the busbar 40 in the battery 10, so as to achieve the series connection or the parallel connection between two adjacent battery cells 30.

Specifically, the electrode terminal 33 can be connected to the current collector 35 inside the battery cell 30 to be connected, so as to the electrode tab 322 through the current collector 35; alternatively, the electrode terminal 33 can be connected to a lithium-supplement component inside the battery cell 30 to provide the electrical energy to the lithium-supplement component, so that the lithium-supplement component can release lithium ions or elemental lithium in time.

Optionally, the integrated circuit member 34 can be directly connected to the electrode terminal 33, or the integrated circuit member 34 can be connected to the electrode terminal 33 through an intermediate connecting member. The connection method can be selected according to the actual needs.

In some embodiments, the integrated circuit member 34 is bonded or welded to the electrode terminal 33.

Thus, the connection between the integrated circuit and the electrode terminal 33 can be simple and the good connection stability can be achieved.

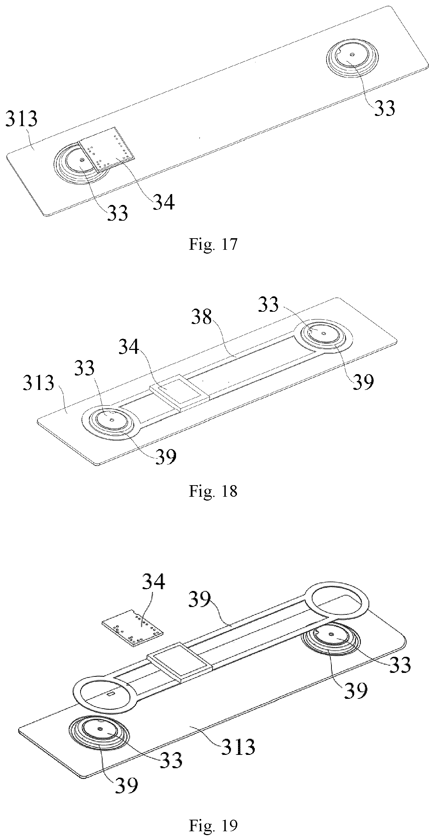

As shown in Fig. 18 and Fig. 19, in some embodiments, the casing 31 includes a first wall 313, the battery cell 30 further includes a holding member 38, an insulating component 39and an electrode terminal 33, the electrode terminal 33 is configured to transmit electrical energy, and the insulating component 39 is configured to insulate the electrode terminal 33 from the first wall 313. The holding member 38 is connected to the insulating component 39, and the at least one integrated circuit member 34 is arranged on the holding member 38.

Specifically, the electrode terminal 33 penetrates through the first wall 313, so as to connect with the current collector 35 or the lithium-supplement component inside the battery cell 30.

At least a portion of the insulating component 39 is arranged between the electrode terminal 33 and the first wall 313 to achieve the insulation between the electrode terminal 33 and the first wall 313. It can be understood that the integrated circuit member 34 is connected to the insulating component 39 through the holding component 38. During the assembly process of the battery cell 30, the integrated circuit member 34 can be connected to the holding component 38, and then the holding component 38 can be connected to the insulating component 39.

In some embodiments, if one electrode terminal 33 is arranged on the first wall 313, one insulating component 39 needs to be provided between the first wall 313 and the electrode terminal 33, and the holding member 38 can be connected to one insulating component 39. In some other embodiments, if a plurality of electrode terminals 33 are arranged on the first wall 313, two insulating components 39 need to be arranged at two positions between the first wall 313 and the two electrode terminals 33, respectively. In this case, the holding member 38 can be connected to one of the insulating components 39, or the holding member 38 can be connected to the two insulating components 39.

According to the arrangement, the assembly process of the battery cell 30 can be simplified; moreover, due to the better connection stability between the integrated circuit member 34 and the holding member 38, and between the holding member 38 and insulating component 39, the connection stability of the integrated circuit member 34 can be improved, and the risk of the detachment of the integrated circuit member 34 can be reduced.

Embodiments of the present application provide a battery 10 including the battery cell 30 according to any one of the embodiments as described above.

According to the embodiments of the present application, the battery 10 has the same technical effect as described above due to including the battery cell 30 according to any one of the above embodiments, which will not be repeated here.

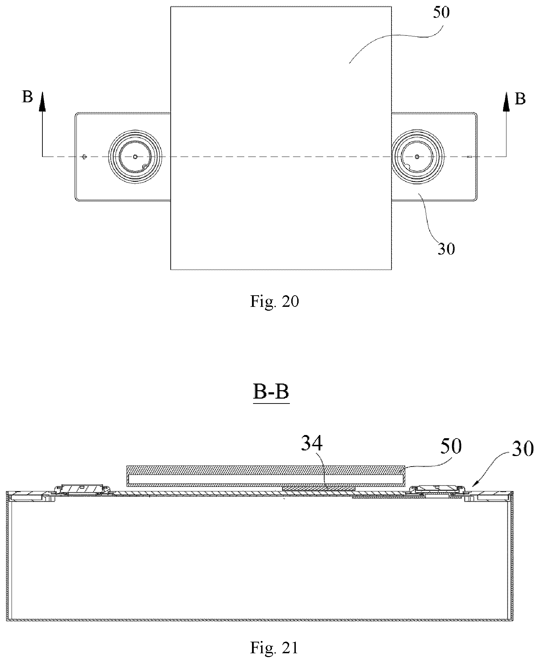

As shown in Fig, 3, Fig. 4, Fig. 20 and Fig. 31, in some embodiments, the battery 10 further includes a busbar 40 and a wiring harness separator 50. The busbar 40 is configured to electrically connect two adjacent battery cells 30. The busbar 40 is connected to the wiring harness separator 50, and the at least one integrated circuit member 34 is arranged on a side of the wiring harness separator 50 facing the battery cells 30.

Specifically, the busbar 40 can be connected to the electrode terminals 33 of two adjacent battery cells 30, so as to achieve the series connection or the parallel connection between the two adjacent battery cells 30. The busbar 40 can be tightly connected to the electrode terminal 33 through a bolt, and the bolt is connected to the wiring harness separator 50 to limit the bolt. The wiring harness separator 50 can be made of plastic material.

The integrated circuit member 34 is arranged on the wiring harness separator 50, and arranged on the side of the wiring harness separator 50 facing the battery cells 30, so that the integrated circuit member 34 can be arranged in the space between the wiring harness separator 50 and the battery cells 30, so as to reduce the additional space occupied by the integrated circuit member 34. Moreover, the integrated circuit members 34 can be used to detect the changes in pressure, temperature or the like, so as to understand the working condition of the corresponding battery cells 30 in real time.

Embodiments of the present application provide a battery 10 including the battery 10 according to any one of the embodiments as described above, which is configured to provide electrical energy.

It should be noted that the embodiments and features in the embodiments of the present application can be combined with one another without conflict.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some of the technical features, these modifications or substitutions do not separate the essence of the corresponding technical solutions from the gist and the scope of the technical solutions of the various embodiments of the present application.

## Claims

1. A battery cell comprising:
a casing, comprising an accommodating chamber; and
at least one integrated circuit member, comprising a detecting element that is configured to detect a working condition of the battery cell, and the integrated circuit member being arranged inside or outside the accommodating chamber.

2. The battery cell according to claim 1, wherein the integrated circuit member is in a shape of plate, sheet or block.

3. The battery cell according to claim 1 or 2, wherein the detecting element comprises a temperature sensor, a pressure sensor, a stress sensor, a current sensor, a gas composition detecting sensor, a Bragg grating or a Fabry Perot resonant cavity.

4. The battery cell according to any one of claims 1 to 3, wherein the at least one integrated circuit member further comprises a wireless communication unit, which is configured for wireless communication with an exterior of the battery cell.

5. The battery cell according to any one of claims 1 to 4, further comprising an electrode assembly accommodated in the accommodating chamber, wherein the electrode assembly comprises an electrode body and an electrode tab led out from an end of the electrode body; and
the at least one integrated circuit member is arranged at the electrode tab, and/or the at least one integrated circuit member is arranged at the electrode body.

6. The battery cell according to claim 5, wherein the electrode body comprises two first surfaces opposite to each other in a first direction and two second surfaces opposite to each other in a second direction, the two first surfaces are connected to the two second surfaces, each of the first surfaces is set in an arc shape, the electrode tab is led out from the end of the electrode body in a third direction, each two of the first direction, the second direction and the third direction are perpendicular to each other, and the at least one integrated circuit member is arranged on the first surface.

7. The battery cell according to claim 5 or 6, further comprising a current collector, which is electrically connected to the electrode tab;
wherein a surface of the electrode tab facing the casing comprises a first connecting region and a second connecting region, the first connecting region is connected to the current collector, and the at least one integrated circuit member is arranged within the second connecting region and spaced apart from the current collector.

8. The battery cell according to any one of claims 1 to 7, further comprising an electrode assembly and an insulating member, wherein the insulating member and the electrode assembly are located in the accommodating chamber, the insulating member is arranged between the casing and a peripheral surface of the electrode assembly, and the at least one integrated circuit member is arranged on the insulating member.

9. The battery cell according to any one of claims 1 to 8, wherein the casing comprises a first wall, and the at least one integrated circuit member is arranged on the first wall.

10. The battery cell according to claim 9, wherein the integrated circuit member is bonded, snap-fitted or hot-melt connected to the first wall.

11. The battery cell according to claim 9 or 10, wherein the first wall is provided with a groove, and the at least one integrated circuit member is arranged in the groove.

12. The battery cell according to claim 11, wherein a depth of the groove is h1, a thickness of the integrated circuit member is h2, and h1 ≥ h2.

13. The battery cell according to any one of claims 9 to 12, wherein the first wall comprises a protruding platform, and the at least one integrated circuit member is arranged on the protruding platform.

14. The battery cell according to any one of claims 1 to 13, wherein the casing comprises a first wall, the battery cell further comprises a support member, the at least one integrated circuit member is connected to the support member, and the support member is connected to the first wall.

15. The battery cell according to claim 14, wherein the support member is hot-melt connected, bonded or snap-fitted to the first wall.

16. The battery cell according to claim 14 or 15, wherein the at least one integrated circuit member is bonded, snap-fitted or hot-melt connected to the support member.

17. The battery cell according to any one of claims 9 to 16, wherein the first wall comprises a body part and an insulating part, the insulating part is arranged on a side of the body part close to the accommodating chamber, the insulating part comprises a protrusion protruding towards the accommodating chamber, and the at least one integrated circuit member is arranged on the insulating part; and
the integrated circuit member and the protrusion are arranged side by side in a direction perpendicular to a thickness direction of the first wall.

18. The battery cell according to claim 17, wherein a maximum size of the integrated circuit member is smaller than a size of the protrusion in the thickness direction.

19. The battery cell according to claim 17 or 18, further comprising an electrode terminal, wherein the electrode terminal penetrates through the body part and the insulating part, and the integrated circuit member is spaced apart from the electrode terminal in the direction perpendicular to the thickness direction of the first wall.

20. The battery cell according to any one of claims 9 to 19, wherein the at least one integrated circuit member is arranged on a side of the first wall facing the accommodating chamber;
the battery cell comprises a plurality of electrode assemblies, each of the electrode assemblies comprises two first surfaces opposite to each other in a first direction and two second surfaces opposite to each other in a second direction, the two first surfaces are connected to the two second surfaces, each of the first surfaces is set in an arc shape, the first direction is perpendicular to the second direction, and the first direction is parallel to a thickness direction of the first wall; and
the at least one integrated circuit member is located between two adjacent first surfaces in the second direction.

21. The battery cell according to any one of claims 1 to 20, further comprising a first wall and an electrode terminal, wherein the electrode terminal is arranged on the first wall and configured to transmit electrical energy, and the at least one integrated circuit member is connected to a portion of an end face of the electrode terminal located outside the accommodating chamber.

22. The battery cell according to claim 21, wherein the integrated circuit member is bonded or welded to the electrode terminal.

23. The battery cell according to any one of claims 1 to 22, wherein the casing comprises a first wall, the battery cell further comprises a holding member, an insulating component and an electrode terminal, the electrode terminal is configured to transmit electrical energy, and the insulating component is configured to insulate the electrode terminal from the first wall; and
the holding member is connected to the insulating component, and the at least one integrated circuit member is arranged on the holding member.

24. A battery comprising the battery cell according to any one of claims 1 to 23.

25. The battery according to claim 24, further comprising:
a busbar, configured to electrically connect two adjacent battery cells; and
a wiring harness separator, wherein the busbar is connected to the wiring harness separator, and the at least one integrated circuit member is arranged on a side of the wiring harness separator facing the battery cells.

26. An electricity-consuming device comprising the battery according to claim 24 or 25, which is configured to provide electrical energy.
